# EUROPÄISCHE PATENTSCHRIFT

(11) **EP 0 811 517 B1**
(45) Veröffentlichungstag und Bekanntmachung des Hinweises auf die Patenterteilung: **16.08.2000**
(21) Anmeldenummer: 97107760.7
(22) Anmeldetag: 13.05.1997
(51) Int. Cl.: B60J 7/12, B60J 10/10

(54) **Faltverdeck für ein Fahrzeug, insbesondere Personenkraftwagen**
Foldable roof for vehicle,especially for motor vehicle
Capote pliante pour véhicule, en particulier pour véhicule automobile

(30) Priorität: 07.06.1996 DE 19622953
(43) Veröffentlichungstag der Anmeldung: 10.12.1997
(73) Patentinhaber: Dr.Ing.h.c. F. Porsche Aktiengesellschaft, 70435 Stuttgart (DE)
(72) Erfinder: May, Herbert, 74861 Neudenau (DE); Bauer, Dieter, 71229 Leonberg (DE); Aydt, Matthias, 71735 Eberdingen (DE)

(56) Entgegenhaltungen:
- EP-A- 0 352 428
- DE-C- 733 270
- ADOLF LEHMANN: "VERDECKE AUF AUTOMOBILEN VON BEGINN BIS ZUR GEGENWART" DEUTSCHES MUSEUM, Bd. 49, Nr. 1, 1981, MÜNCHEN, Seiten 72-73, XP000694899

## Beschreibung

Die Erfindung bezieht sich auf ein Faltverdeck für ein Fahrzeug, insbesondere Personenkraftwagen, gemäß dem Oberbegriff des Patentanspruchs 1.

Aus der DE 44 41 666 C1 geht ein Faltverdeck für einen Personenkraftwagen hervor, wobei ein benachbart dem Windschutzscheibenrahmen angeordneter großflächiger, formsteifer Verdeckabschnitt an seinen beiden Längsseiten über je zwei Lenker mit einem aufbauseitigen Verdecklager verbunden ist. Am formsteifen vorderen Verdeckabschnitt und am außenliegenden B-Säulen-Lenker ist jeweils ein durchgehender Dachrahmenabschnitt vorgesehen, an dem der Verdeckbezug und Dichtkörper festlegbar sind.

Aufgabe der Erfindung ist es, die Dachrahmenabschnitte zur Festlegung des Verdeckbezuges und der Dichtkörper an einem Verdeckgestell der eingangs genannten Gattung so weiterzubilden, daß das Verdeckgestänge in seiner versenkten heckseitigen Ablagestellung möglichst wenig Bauraum - insbesondere in Höhenrichtung - beansprucht.

Erfindungsgemäß wird diese Aufgabe durch die Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die lediglich abschnittsweise Anbringung von seitlichen Dachrahmenabschnitten an beiden Lenkern der Raumbedarf für die versenkt angeordnete heckseitige Ablagestellung des Faltverdecks, insbesondere in Höhenrichtung, wesentlich reduziert wird (flache Bauweise). Das abgelegte Faltverdeck paßt sich harmonisch an die Fahrzeugkontur an.

Durch die partielle Anbringung von Dachrahmenabschnitten an beiden Lenkern jeder Fahrzeuglängsseite wird ein dreiteiliger seitlicher Dachrahmen gebildet, so daß sich auch Faltverdecke mit stylingbedingten relativ langen Dachrahmen voll versenkt in einem heckseitigen Aufnahmeraum unterbringen lassen.

Ein einwandfreier, die Abdichtfunktion gewährleistender Dichtungsübergang der beiden Dachrahmenabschnitte wird durch die vorgesehene Fixiereinrichtung zwischen beiden Lenkern sichergestellt. Zumindest der Dachrahmenabschnitt am vorderen Lenker ist einstellbar ausgebildet, damit optisch einwandfreie Anschlüsse an die vorgelagerten und nachfolgenden Dachrahmenabschnitte gewährleistet sind.

Ein Ausführungsbeispiel der Erfindung ist in der Zeichnung dargestellt und wird im folgenden näher erläutert.

Es zeigen
- Fig. 1: eine perspektivische Teilansicht von schräg hinten auf ein Fahrzeug mit einem Verdeck in geschlossener Stellung,
- Fig. 2: eine Teilseitenansicht des Verdeckgestells in Schließstellung des Faltverdecks,
- Fig. 3: einen Schnitt nach der Linie III-III der Fig. 2 in größerer Darstellung,
- Fig. 4: einen Schnitt nach der Linie IV-IV der Fig. 2 in größerer Darstellung,
- Fig. 5: einen Schnitt nach der Linie V-V der Fig. 2 in größerer Darstellung,

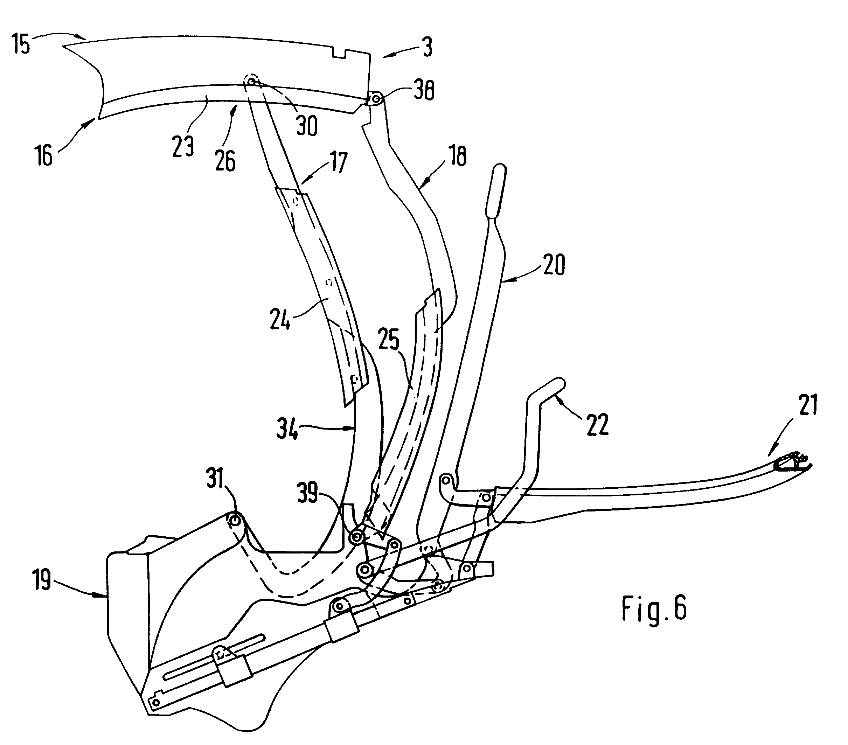

- Fig. 6: eine Teilseitenansicht des Verdeckgestells in einer teilweise zurückgeklappten Zwischenstellung und

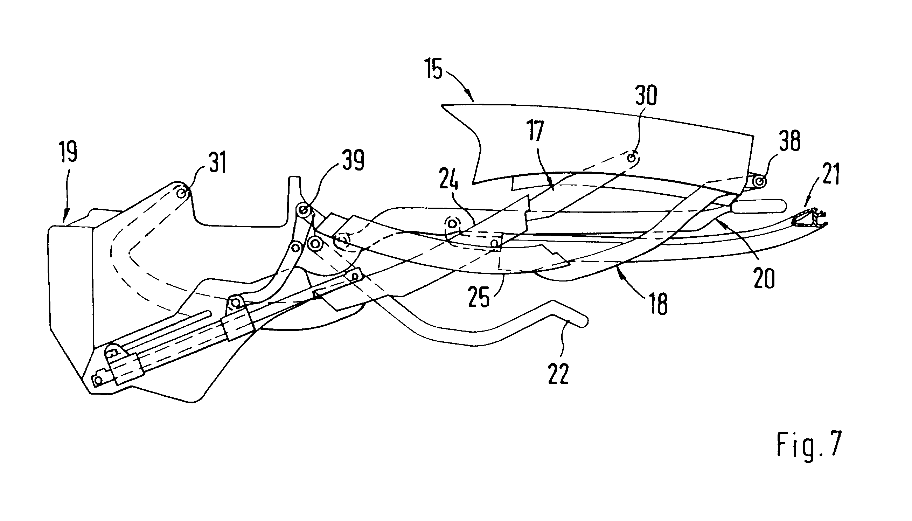

- Fig. 7: eine Teilseitenansicht des Verdeckgestells in der heckseitigen Ablagestellung.

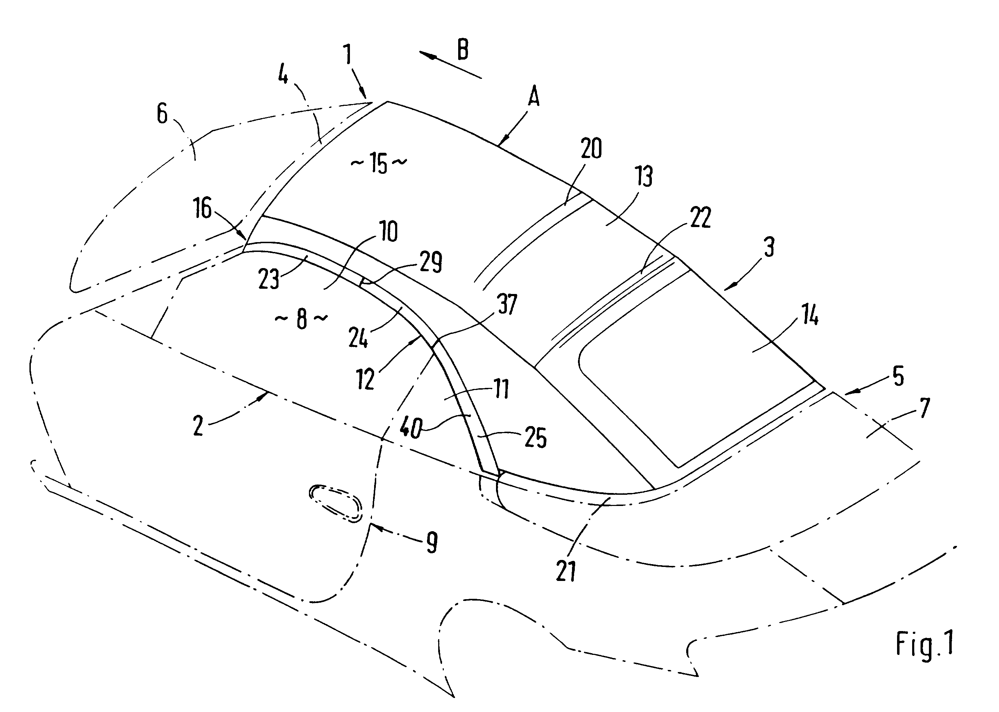

Fig. 1 zeigt einen Teilbereich eines Personenkraftwagens 1, der oberhalb einer Gürtellinie 2 ein Faltverdeck 3 aufweist. Das Faltverdeck 3 erstreckt sich in einer Schließstellung A zwischen einem Windschutzscheibenrahmen 4 und einem Heckbereich 5 und ist über wenigstens einen nicht näher gezeigten Verschluß am Windschutzscheibenrahmen 4 lösbar in Lage gehalten. Der Windschutzscheibenrahmen 4 nimmt eine Windschutzscheibe 6 auf. Im Heckbereich 5 ist ein schwenkbarer Verdeckkastendeckel 7 dargestellt, der einen darunterliegenden Verdeckkasten zumindest teilweise abdeckt. In der zurückgeklappten heckseitigen Ablagestellung ist das Faltverdeck 3 versenkt im Verdeckkasten angeordnet. Ein Fahrgastraum 8 des im Ausführungsbeispiel 2 + 2-sitzig ausgebildeten Personenkraftwagens 1 ist durch seitliche Türen 9 zugänglich, wobei die Türen 9 oberhalb der Gürtellinie 2 rahmenlos ausgebildete Türfensterscheiben 10 aufweisen. An die Türfensterscheiben 10 grenzen versenkbar ausgebildete Fondseitenscheiben 11 an.

Das Faltverdeck 3 setzt sich aus einem Verdeckgestell 12 und einem am Verdeckgestell 12 in Lage gehaltenen elastischen Verdeckbezug 13 zusammen. Im hinteren Bereich des Verdeckbezuges 13 ist eine Sichtscheibe 14 vorgesehen, die durch eine flexible oder starre Heckscheibe gebildet wird.

Das Verdeckgestell 12 umfaßt im wesentlichen einen benachbart dem Windschutzscheibenrahmen 4 angeordneten, großflächig ausgebildeten formsteifen Verdeckabschnitt 15, der an seinen beiden seitlich außenliegenden Längsseiten 16 jeweils über zwei ein Viergelenk bildende Lenker 17, 18 mit einem aufbauseitig angebrachten Verdecklager 19 verbunden ist.

Das langgestreckte Verdecklager 19 bildet auf jeder Fahrzeuglängsseite ein tragendes Element der Fahrzeugstruktur und ist somit ein crashverstärkendes Bauteil.

Ferner umfaßt das Verdeckgestell 12 einen an den beiden Verdecklagern 19 schwenkbar gelagerten Hauptspriegel 20, einen mit dem Hauptspriegel 20 gelenkig verbundenen heckseitigen Spannbügel 21 und einen Eckspriegel 22. Der Eckspriegel 22 ist ebenfalls an den beiden Verdecklagern 19 schwenkbar gelagert. Der Eckspriegel 22, der heckseitige Spannbügel 21 und der Hauptspriegel 20 sind kinematisch entkoppelt und werden nur über die Stoffbefestigung des Verdeckbezuges 13 gesteuert. Für Servicearbeiten läßt sich der Spannbügel 21 in eine nicht näher dargestellte aufrechte Montagestellung hochklappen.

Erfindungsgemäß sind an beiden Längsseiten 16 des Personenkraftwagens 1 am formsteifen Verdeckabschnitt 15 und an den beiden Lenkern 17, 18 jeweils Dachrahmenabschnitte 23, 24, 25 ausgebildet, an denen der Verdeckbezug 13 und mit der Türfensterscheibe 10 bzw. der Fondseitenscheibe 11 zusammenwirkende Dichtkörper 26, 27, 28 festlegbar sind.

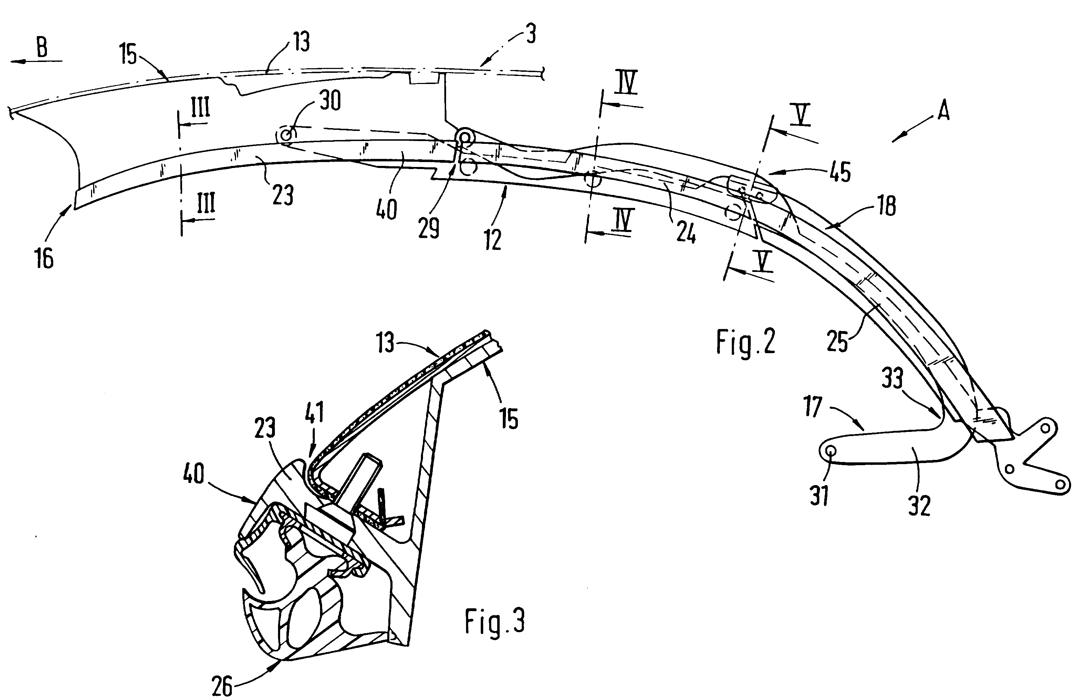

In Schließstellung des Faltverdecks 3 bilden die außenhautbündig aneinandergesetzten Dachrahmenabschnitte 23, 24, 25 einen dreiteiligen seitlichen Dachrahmen. Die beiden in Schließstellung A des Faltverdecks 3 vorderen Dachrahmenabschnitte 23 sind einstückig mit dem vorderen formsteifen Verdeckabschnitt 15 ausgebildet und wie dieser aus einer Leichtmetallegierung (Magnesiumlegierung) im Gießverfahren hergestellt (Fig. 3).

Die vorderen Dachrahmenabschnitte 23 erstrecken sich im wesentlichen über die gesamte Längserstreckung des formsteifen Verdeckabschnitts 15.

Der - in Fahrtrichtung B gesehen - am vorderen Lenker 17 vorgesehene Dachrahmenabschnitt 24 ist derart angeordnet, daß er in Schließstellung A des Faltverdecks 3 unter Bildung einer schmalen ersten Fuge 29 an den hinteren Rand des vorderen Dachrahmenabschnitts 23 - fluchtend mit diesem - anschließt. Die Fuge 29 erstreckt sich in aufrechter Richtung und verläuft schräg nach hinten oben.

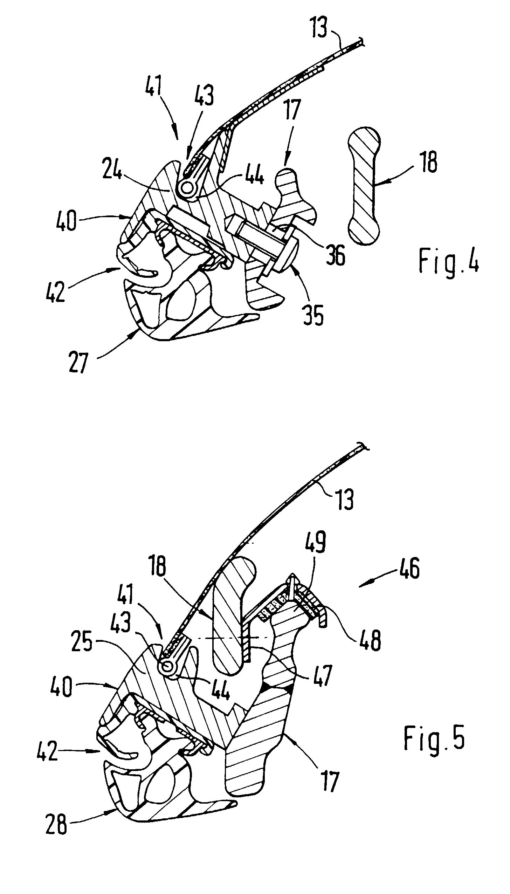

Der vordere Lenker 17 ist mit seinem einen Ende 30 gelenkig mit dem formsteifen Verdeckabschnitt 15 und mit seinem anderen Ende 31 mit dem Verdecklager 19 verbunden. Benachbart dem Verdecklager 19 weist der Lenker 17 einen ersten, kurzen geradlinigen Abschnitt 32 auf, der über einen Übergangsbereich 33 in einen zweiten langgestreckten Abschnitt 34 übergeht, wobei der Abschnitt 34 einen gebogenen Formverlauf aufweist. Der einen mittleren Teil des seitlichen Dachrahmens bildende Dachrahmenabschnitt 24 wird durch ein Gußteil aus einer Leichtmetallegierung gebildet und ist einstellbar mit dem Lenker 17 verbunden. Dies kann gemäß Fig. 4 beispielsweise durch Befestigungsschrauben 35 erfolgen. Zur Einstellbarkeit in Höhenrichtung weisen Öffnungen 36 am Lenker 17 einen wesentlich größeren Durchmesser auf als der Durchmesser der Befestigungsschrauben 35.

Der - in Fahrtrichtung B gesehen - am hinteren Lenker 18 vorgesehene Dachrahmenabschnitt 25 ist derart angeordnet, daß er sich in Schließstellung A des Faltverdecks 3 unter Bildung einer schmalen zweiten Fuge 37 an das hintere Ende des Dachrahmenabschnitts 24 des vorderen Lenkers 17 - fluchtend zu diesem - anschließt. Auch der hintere Dachrahmenabschnitt 25 wird durch ein separates, im Gießverfahren hergestelltes Teil aus einer Leichtmetallegierung gebildet, das lösbar und gegebenenfalls einstellbar mit dem Lenker 18 verbunden ist.

Der hintere Lenker 18 ist mit seinem einen Ende 38 an den hinteren Rand des formsteifen Verdeckabschnitts 15 und mit seinem anderen Ende 39 drehbar an das Verdecklager 19 angeschlossen. Die Enden 30, 31, 38, 39 bilden auf jeder Längsseite des Faltverdecks 3 ein Gelenkviereck (Parallelogramm).

Die Dachrahmenabschnitte 23, 24, 25 bilden in einem seitlich außenliegenden Bereich abschnittsweise einen Außenhautabschnitt 40 der Karosserie, der nicht vom Verdeckbezug 13 umgeben ist, sondern freiliegt. Die Befestigungsabschnitte 41, 42 für den Verdeckbezug und die Dichtkörper 26, 27, 28 sind getrennt voneinander an den Dachrahmenabschnitten 23, 24, 25 ausgebildet.

Der Verdeckbezug 13 ragt in Schließstellung A des Faltverdecks 3 hinter dem formsteifen Verdeckabschnitt 15 mit einem Randbereich 43 in eine rinnenförmige Ausnehmung 44 der Dachrahmenabschnitte 24, 25 hinein, wobei die Ausnehmung 44 an der Oberseite der Dachrahmenabschnitte 24, 25 ausgebildet ist. Zwischen dem oberen Befestigungsabschnitt 41 für den Verdeckbezug 13 und dem unteren Befestigungsabschnitt 42 für die Dichtkörper 26, 27, 28 erstreckt sich der einen Außenhautabschnitt 40 bildende Bereich der Dachrahmenabschnitte 23, 24, 25, wobei diese Fläche eine Stylingfläche bildet, die sich von vorne nach hinten hin kontinuierlich verbreitert (Fig. 1).

Im Übergangsbereich 45 der beiden Dachrahmenabschnitte 24, 25 ist örtlich eine Fixiereinrichtung 46 vorgesehen, durch die eine Positionierung in Y-Richtung der beiden getrennten Dichtkörper 27, 28 gewährleistet ist.

Die Fixiereinrichtung 46 umfaßt einen an der Innenseite des hinteren Lenkers 18 befestigten, profilierten Halter 47 mit einer örtlich angebrachten elastischen Lage 48 (Gummiteil), die in Schließstellung des Faltverdecks 3 den darunterliegenden oberen Rand 49 des vorderen Lenkers 17 formschlüssig umgreift. Der Halter 47 ist mittels nicht näher gezeigter Befestigungsschrauben einstellbar mit dem Lenker 18 verbunden (Fig. 5).

In Schließstellung A des Faltverdecks 3 verlaufen die beiden Lenker 17, 18 - in der Seitenansicht gesehen - abschnittsweise, etwa gleichgerichtet zueinander, wogegen sie sich in der Draufsicht mit seitlichem Abstand zueinander erstrecken.

Die Lenker 17, 18 sind im Ausführungsbeispiel als Stahl-Schmiedeteile ausgebildet.

## Patentansprüche

1. Faltverdeck für ein Fahrzeug, insbesondere Personenkraftwagen, mit einem Verdeckgestell und einem Verdeckbezug, wobei ein benachbart einem Windschutzscheibenrahmen verlaufender großflächiger formsteifer Verdeckabschnitt an seinen beiden Längsseiten jeweils über zwei ein Viergelenk bildende Lenker mit aufbauseitig angebrachten Verdecklagern verbunden ist und an seitlich außenliegenden Bereichen des formsteifen Verdeckabschnitts an zumindest einem Lenker jeder Fahrzeuglängsseite Dachrahmenabschnitte zur Festlegung des Verdeckbezugs und von Dichtkörpern angeordnet sind, dadurch gekennzeichnet, daß jeweils an beiden Lenkern (17, 18) einer Längsseite des Verdeckgestells (12) bereichsweise Dachrahmenabschnitte (24, 25) vorgesehen sind, dergestalt, daß die Dachrahmenabschnitte (23, 24, 25) des vorderen Verdeckabschnitts (15) und der Lenker (17, 18) in Schließstellung (A) des Faltverdecks (3) einen außenhautbündig aneinandergesetzten dreiteiligen seitlichen Dachrahmen bilden.

2. Faltverdeck nach Anspruch 1, dadurch gekennzeichnet, daß der - in Fahrtrichtung B gesehen - am vorderen Lenker (17) vorgesehene Dachrahmenabschnitt (24) derart angeordnet ist, daß er sich in Schließstellung (A) des Faltverdecks (3) unter Bildung einer schmalen ersten Fuge (29) an den vorgelagerten Dachrahmenabschnitt (23) des formsteifen Verdeckabschnitts (15) fluchtend anschließt.

3. Faltverdeck nach den Ansprüchen 1 und 2, dadurch gekennzeichnet, daß der - in Fahrtrichtung B gesehen - am hinteren Lenker (18) vorgesehene Dachrahmenabschnitt (25) derart angeordnet ist, daß er sich in Schließstellung (A) des Faltverdecks (3) unter Bildung einer schmalen zweiten Fuge (37) an den Dachrahmenabschnitt (24) des vorderen Lenkers (17) fluchtend anschließt.

4. Faltverdeck nach einem oder mehreren der vorangegangenen Ansprüche, dadurch gekennzeichnet, daß in einem Übergangsbereich (45) der beiden lenkerseitigen Dachrahmenabschnitte (24, 25) eine Fixiereinrichtung (46) zwischen beiden Lenkern (17, 18) vorgesehen ist, durch die die Dichtkörper (27, 28) beider Lenker (17, 18) lagerichtig zueinander ausgerichtet sind in X-Richtung.

5. Faltverdeck nach Anspruch 4, dadurch gekennzeichnet, daß die Fixiereinrichtung (46) einen an der Innenseite des hinteren Lenkers (18) befestigten Halter (47) mit einer örtlich angebrachten elastischen Lage (48) umfaßt, die in Schließstellung (A) des Faltverdecks (3) den oberen Rand (49) des vorderen Lenkers (17) formschlüssig umgreift.

6. Faltverdeck nach einem oder mehreren der vorangegangenen Ansprüche, dadurch gekennzeichnet, daß die an den Lenkern (17, 18) angebrachten Dachrahmenabschnitte (24, 25) durch Druckgußteile aus einer Leichtmetallegierung gebildet werden, wobei die Dachrahmenabschnitte (24, 25) mittels Befestigungsschrauben (35) an den Lenkern (17, 18) in Lage gehalten sind.

## Claims

1. A folding roof for a vehicle, in particular a motor car, with a roof frame and a roof cover, a dimensionally rigid roof section of large surface area along and adjoining a windscreen frame being connected on its two long edges, in each case by means of two guide-members forming a four-jointed element, with roof supports mounted on the assembly side, and roof-frame sections for fastening of the roof cloth and of sealing members being arranged on laterally external regions of the dimensionally rigid section of roof on at least one guide-member of each long side of the vehicle, characterised in that sections of roof frame (24, 25) are provided in regions of each of the two guide-members (17, 18) on a long side of the roof frame (12) in such a way that, in a closed position (A) of the folding roof (3), the roof-frame sections (23, 24, 25) of the anterior roof section (15) and of the guide-members (17, 18) form a contiguous three-part lateral roof frame flush with the outer skin.

2. A folding roof according to Claim 1, characterised in that, when viewed in the direction of travel B, the roof-frame section (24) provided on the anterior guide-member (17) is arranged in such a way that, in a closed position (A) of the folding roof (3), it lies adjacent to and flush with the immediately anteriorly positioned roof-frame section (23) of the dimensionally rigid roof section (15) with formation of a narrow first joint (29).

3. A folding roof according to Claims 1 and 2, characterised in that, when viewed in the direction of travel B, the roof-frame section (25) provided on the posterior guide-member (18) is arranged in such a way that, in a closed position (A) of the folding roof (3), it lies adjacent to and flush with the roof-frame section (24) of the anterior guide-member (17) with formation of a narrow second joint (37).

4. A folding roof according to one or several of the preceding claims, characterised in that a locating device (46) between the two guide-members (17, 18) is provided within a transition zone (45) of the two roof-frame sections (24, 25) on the guide-member side, through which locating device the sealing members (27, 28) of the two guide-members (17, 18) are aligned in a positionally correct manner relative to one another in the X direction.

5. A folding roof according to Claim 4, characterised in that the locating device (46) comprises a holder (47) attached on the inner face of the posterior guide-member (18) and having a locally applied elastic layer (48) which, in the closed position (A) of the folding roof (3), grips around the upper edge (49) of the anterior guide-member (17) in a positive locking manner.

6. A folding roof according to one or several of the preceding claims, characterised in that the roof-frame sections (24, 25) mounted on the guide-members (17, 18) are formed of die-cast elements made of a light metal alloy, the roof-frame sections (24, 25) being held in position on the guide rods (17, 18) by means of fastening screws (35).

## Revendications

1. Capote pliante pour un véhicule, notamment une voiture de tourisme, comportant un bâti et un revêtement, une partie rigide et de grande surface de la capote s'étendant au voisinage d'un cadre de pare-brise et étant reliée à chacun de ses deux côtés longitudinaux, à des paliers de capote, placés côté carrosserie, par l'intermédiaire de deux bras oscillants qui forment un quadrilatère articulé, et des parties du cadre du toit étant disposées dans des zones situées latéralement à l'extérieur de la partie rigide de la capote, sur au moins un bras oscillant de chaque côté longitudinal du véhicule, pour la fixation du revêtement de la capote et de corps d'étanchéité, caractérisée en ce que sur chacun des deux bras oscillants (17, 18) d'un côté longitudinal du bâti (12) de la capote sont prévues par endroits des parties de cadre de toit (24, 25), de telle sorte que les parties (23, 24, 25) du cadre de toit de la partie avant (15) de la capote et des bras oscillants (17, 18) en position de fermeture (A) de la capote pliante (3) forment un cadre de toit latéral en trois parties juxtaposées à fleur de l'enveloppe extérieure.

2. Capote pliante selon la revendication 1, caractérisée en ce que la partie (24) du cadre de toit, prévue sur le bras oscillant avant (17) - dans le sens de marche (B) - est disposée de manière qu'en position de fermeture (A) de la capote pliante (3), elle se raccorde en alignement à la partie (23) du cadre de toit située à l'avant de la partie rigide (15) de la capote, en formant un premier joint (29) étroit.

3. Capote pliante selon les revendications 1 et 2, caractérisée en ce que la partie (25) du cadre de toit prévue sur le bras oscillant arrière (18) - dans le sens de marche (B) - est disposée de manière qu'en position de fermeture (A) de la capote pliante (3), elle se raccorde en alignement à la partie (24) du cadre de toit du bras oscillant avant (17), en formant un deuxième joint (37) étroit.

4. Capote pliante selon une ou plusieurs des revendications précédentes, caractérisée en ce que dans une zone de transition (45) des deux parties (24, 25) du cadre de toit côté bras oscillants, il est prévu un dispositif de fixation (46) entre les deux bras oscillants (17, 18), par lequel des corps d'étanchéité (27, 28) des deux bras oscillants (17, 18) sont orientés dans une position correcte l'un par rapport à l'autre dans la direction X.

5. Capote pliante selon la revendication 4, caractérisée en ce que le dispositif de fixation (46) comprend un support (47) fixé sur le côté intérieur du bras oscillant arrière (18) avec une couche élastique (48) placée localement, qui entoure par correspondance de forme le bord supérieur (49) du bras oscillant avant (17), en position de fermeture (A) de la capote pliante (3).

6. Capote pliante selon une ou plusieurs des revendications précédentes, caractérisée en ce que les parties (24, 25) du cadre de toit placées sur les bras oscillants (17, 18), sont formées par des éléments en fonte moulée sous pression en un alliage léger, les parties (24, 25) du cadre de toit étant immobilisées sur les bras oscillants (17, 18) au moyen de vis de fixation (25).
